(19) **Europäisches Patentamt / European Patent Office / Office européen des brevets**

(11) **EP 3 576 310 B1**

(12) **EUROPEAN PATENT SPECIFICATION**

(45) Date of publication and mention
of the grant of the patent:
**22.03.2023 Bulletin 2023/12**

(21) Application number: **19187231.6**

(22) Date of filing: **07.09.2005**

(51) International Patent Classification (IPC):
*H04B 7/0408* *(2017.01)*   *H04B 7/06* *(2006.01)*
*H04W 16/28* *(2009.01)*   *H04W 28/18* *(2009.01)*
*H04B 7/08* *(2006.01)*   *H04W 8/22* *(2009.01)*
*H04W 8/24* *(2009.01)*   *H04W 48/10* *(2009.01)*
*H04W 88/08* *(2009.01)*

(52) Cooperative Patent Classification (CPC):
**H04W 16/28; H04B 7/0408; H04B 7/0628;**
**H04W 28/18;** H04B 7/0695; H04B 7/088;
H04W 8/22; H04W 8/245; H04W 48/10;
H04W 88/08

(54) **IMPLEMENTING A SMART ANTENNA IN A WIRELESS LOCAL AREA NETWORK**

IMPLEMENTIERUNG EINER INTELLIGENTEN ANTENNE IN EINEM DRAHTLOSEN LOKALEN
NETZWERK

MISE EN ŒUVRE D'UNE ANTENNE INTELLIGENTE DANS UN RÉSEAU LOCAL SANS FIL

(84) Designated Contracting States:
**AT BE BG CH CY CZ DE DK EE ES FI FR GB GR**
**HU IE IS IT LI LT LU LV MC NL PL PT RO SE SI**
**SK TR**

(30) Priority: **10.09.2004 US 608776 P**
**10.09.2004 US 60913204 P**
**10.09.2004 US 60875804 P**
**21.12.2004 US 18794**
**29.12.2004 US 25018**
**25.02.2005 US 66915**

(43) Date of publication of application:
**04.12.2019 Bulletin 2019/49**

(62) Document number(s) of the earlier application(s) in
accordance with Art. 76 EPC:
**16184244.8 / 3 119 010**
**09161018.8 / 2 106 037**
**05794185.8 / 1 787 401**

(73) Proprietor: **InterDigital Technology Corporation**
**Wilmington, DE 19809-3727 (US)**

(72) Inventors:
- **Marinier, Paul**
 **Brossard, Quebec J4X 2J7 (CA)**
- **Chandra, Arty**
 **Manhasset Hills, New York 11040 (US)**
- **Cha, Inhyok**
 **Yardley, Pennsylvania 19067 (US)**
- **Roy, Vincent**
 **Longueuil, Quebec J4N 1N3 (CA)**

(74) Representative: **AWA Sweden AB**
**Box 5117**
**200 71 Malmö (SE)**

(56) References cited:
**EP-A1- 1 187 506**   **US-A1- 2002 094 843**
**US-A1- 2002 193 146**

**Description**

FIELD OF INVENTION

The present invention generally relates to wireless local area networks (WLANs), and more particularly, to methods and apparatus for implementing a smart antenna in a WLAN, for supporting use of a smart antenna in a WLAN, and for transferring smart antenna capability information between stations (STAs) in a WLAN.

BACKGROLTND

In a WLAN operating in infrastructure mode, a STA typically performs scanning in order to estimate which access point (AP) is the best candidate to serve it. Scanning performed by the STA can be passive or active. In passive scanning, the STA listens for beacon frames sent by the APs. In active scanning, the STA sends out probe requests and the APs respond by sending a probe response to the STA.

In order to enhance coverage and increase throughput, APs can be equipped with advanced antenna structures, which allow them to change the radiation pattern (the beam) they use. The term "smart antenna" as used herein means a set of N antennas that have different radiation patterns, typically pointing in selected directions (or not pointing toward any particular direction in the case of an omni-directional antenna). The transmitter and/or receiver of a node (AP or STA) selects the most appropriate antenna (or "beam") for communicating with its counterpart(s). The most appropriate beam is typically the one that results in the highest signal-to-interference-plus-noise ratio (SINR) at the receiving node in the case of dedicated connections, where a node is transmitting a packet to another specific node.

Enhancing coverage is a function of the position of the STA to which the AP sends packets and/or of the time-varying channel. Because beacon frames sent by an AP are not aimed at a particular STA, but rather at a multitude of STAs, they tend to be sent uniformly across all directions (i.e., with an omni-directional beam). Similarly, because it is desirable for an AP to hear the packets from all its associated STAs, the AP typically listens to the channel using an omni-directional beam. This type of beam does not necessarily allow the AP to determine which beam is the best to serve a STA, even after it has received a probe request from the STA. Therefore, a probe response also tends to be transmitted using an omni-directional beam.

A STA uses the beacons (passive scanning) and the probe requests (active scanning) to estimate, among other things, the quality of the radio links (e.g., signal to noise ratio (SNR)) that it could obtain from the different APs. Beacons and probe responses are typically sent by the APs using an omni-directional beam for the reasons described above. This creates a situation where a STA may estimate, based on the received signal quality it perceives from the beacons and/or probe responses, that a given AP is the best candidate, when in fact this AP will perform worse than another AP for the transmission of traffic frames which can be sent with directional beams.

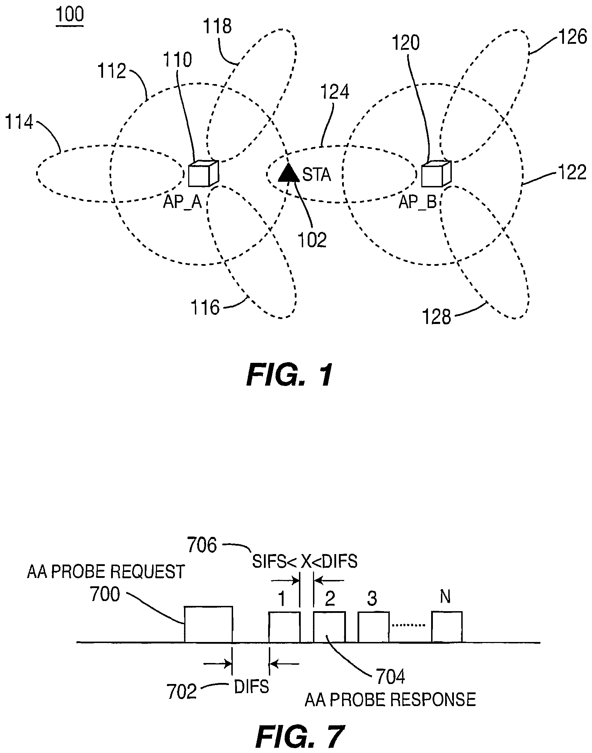

Figure 1 shows an exemplary WLAN 100 including a STA 102 and two APs, AP_A 110 and AP_B 120. AP_A 110 can utilize an omni-directional beam 112 and a plurality of directional beams 114, 116, 118. AP_B 120 can utilize an omni-directional beam 122 and a plurality of directional beams 124, 126, 128.

The STA 102 measures the received power of the various beams as shown in Table 1.

Table 1 - Measured Received Signal Power at STA 102

| Signal from | On beam number | Beam type | Received power at STA 102 |
|---|---|---|---|
| AP_A | 112 | omni | -75 dBm |
| AP_A | 116 | directional | -85 dBm |
| AP_A | 118 | directional | -85 dBm |
| AP_B | 122 | omni | -80 dBm |
| AP_B | 124 | directional | -70 dBm |

The STA 102 can receive stronger beacons and/or probe responses via omni-directional beam 112 from AP_A 110 than via omni-directional beam 122 from AP_B 120. However, AP_B 120 would be a better candidate than AP_A 110 for transmitting traffic frames, since AP_B 120 is in a better position to make use of its advanced antenna structure and focus the energy towards the STA 102 (via directional beam 124).

In an AP-based WLAN, multiple STAs may be associated to a given AP at a given time. If the multiple-access scheme is carrier sense multiple access/collision avoidance (CSMA/CA), such as in 802.11-based WLANs, any STA is susceptible to transmit a packet (also called a "frame") to its associated AP at any given time. The AP determines which of its associated STAs has transmitted a packet after the packet has been completely received and decoded, based on the source address contained in the medium access control (MAC) header of the packet. The AP needs to have received the whole packet prior to making the source determination, because the error detection bits covering both the MAC header and the MAC payload are received at the end of the packet.

In a mesh architecture, STAs (or "mesh nodes") may also be equipped with smart antennas in order to improve the SNR of received signals or for other purposes such as interference reduction.

The multiple-access scheme in 802.11-based WLANs makes selecting the most appropriate beam for receiving packets at the AP difficult when more than one STA is associated to the AP. This is because STAs may be located anywhere around the AP, and therefore the most appropriate beam is generally not the same for each STA. Since the identity of the STA is not known before the packet is completely received, the AP cannot use this information to decide which antenna to select for packet reception. The same problem occurs in a mesh architecture, where a mesh node can be linked to more than one other mesh node.

To circumvent this difficulty, several alternatives are possible, but they all have drawbacks.

1) The AP could restrict itself to using an omni-directional pattern for all packet receptions, thus losing the potential gain from using a smart antenna.

2) The AP could use the signals from multiple beams simultaneously and combine them or select the best beam among them. This solution increases the complexity of the receiver, because the signals from multiple beams must be demodulated.

3) The AP could, just after the start of packet reception, switch among all its available beams in a successive manner, pick the beam that results in the best signal quality, and switch to this beam for the remaining duration of the packet reception. This approach has the drawback that the AP risks incorrectly receiving some bits while it attempts less suitable beams for a particular packet, resulting in the loss of the packet.

4) The AP could try decoding the MAC address of the sender (contained in the MAC header of the packet) using an omni-directional antenna and then use the beam most appropriate for the STA identified in the MAC header for the remainder of the packet. The problem with this approach is that the MAC header is transmitted at the same rate as the remainder of the packet. If the omni-directional antenna does not offer sufficient gain for adequate signal quality for the MAC payload, it is unlikely that the MAC header would be decoded correctly. In the opposite case (if the omni-directional antenna did offer sufficient gain), there would be no need to use a smart antenna in the first place.

5) The STAs could be constrained to send every packet using the Request-to-Send/Clear-to-Send (RTS/CTS) procedure. This would allow the AP to identify the sending STA before the arrival of the data packet. However, this is at the cost of a significant throughput penalty due to the overhead of the RTS and CTS packets, which partially defeats the purpose of using smart antennas.

6) The AP could poll STAs using different beams in turn. This approach has two problems. First, it is difficult to attempt to predict the time to spend on each beam in a system with bursty traffic, such as a WLAN. Second, it is difficult to prevent STAs from responding to a poll sent using a beam sub-optimal (but hearable) for them, given the necessary overlap between antenna patterns and the irregularities of the radio environment, such as shadowing.

In a WLAN, smart antenna capabilities may exist at the AP, at the STA, or both. Without a prior exchange of antenna capability information, the AP does not know how to coordinate its smart antenna features with that of a STA and vice versa.

The potentially adverse affect on a WLAN by not exchanging smart antenna capability information can be illustrated in the following example. Suppose that switched-beam smart antennas are employed at both an AP and a STA and yet each end's smart antenna capabilities (for example, the number of beam modes that are available and need to be scanned, as well as time duration needed to test each of the available beams) are not known to the other end. Since neither the AP nor the STA know about the smart antenna capabilities of its receiving end, each will have to either: (1) make guesses as to the smart antenna capabilities of the other end; or (2) try to test its own transmit antenna beams without knowing that the receiving end might, at the same time, employ a beam search of its own.

If the smart antenna capabilities at both ends were known to each other, both devices could follow simple, pre-agreed rules to avoid service degradations due to beam searching at the same time on both ends. For example, if the "beam search time" ($T_{search}$) is known for both the AP and the STA, then a simple rule that could be useful might be that the device (the AP or the STA) that first receives a packet after association should wait for the duration of $T_{search}$ before it starts its own beam search, in an attempt to give the other end (which had initiated transmission) enough time to conduct its own beam search.

Current antenna technologies enhance reception by using receive and/or transmit diversity. These techniques either take longer to obtain any gain or provide less gain than otherwise would have been possible. Additionally, current antenna technologies often need to use proprietary messages to know the antenna capability of a STA. In the absence of this information, the APs and STAs cannot take advantage of antenna capabilities to increase the data rate or range.

For smart antenna features to work effectively, the information on the capabilities of the STA and the AP should be exchanged. Exchanging antenna information also allows possible coordination during optimization of smart antenna features such as beam selection, beam scanning, beam forming, multiple input multiple output (MIMO), and any other capability that allows changing the beam pattern and/or gain of the antennas.

EP 1 187 506 A1 discloses a communication system's transmit configuration being reconfigured based on mobile station associated conditions such as the capability of the mobile receiver, carrier to interference or signal to noise ratios, and the degree of mobility associated with the mobile station. US 2002/193 146 A1 discloses a method and an apparatus for negotiating a transmission scenario in a mixed mode spectrum wireless communication system capable of both MISO (Multiple-Input Single-Output) and SISO (Single-Input Single-Output) traffic.

SUMMARY

The present invention relates to first Institute of Electrical and Electronics Engineers (IEEE) 802.11 station (STA), a method and an access point (AP) for exchanging antenna capability information as defined by the appended claims. Any reference to embodiments herein which do not fall within the scope of the appended claims should be construed as serving merely for facilitating the understanding of this disclosure.

A method for implementing a smart antenna in establishing association between a STA and an AP in a WLAN begins by transmitting a beacon frame by the AP on one antenna beam. The beacon frame is received at the STA, which measures the signal quality of the beacon frame. The AP switches to a different antenna beam and repeats the method until the beacon frame has been transmitted on all antenna beams. The STA associates to the AP that transmits the beacon frame with the highest signal quality on one of its antenna beams. A similar method may be used in which the STA sends a probe request frame to the AP, which then responds with probe response frames sent on multiple antenna beams.

A system for implementing a smart antenna in establishing association between a STA and an AP in a WLAN includes a beacon frame sent from the AP to the STA. The beacon frame includes a field to identify a total number of antenna beams on which a transmission will be made and a field to identify the beam that is currently being transmitted on.

Another system for implementing a smart antenna in establishing association between a STA and an AP in a WLAN includes a probe request frame sent from the STA to the AP and a probe response frame sent from the AP to the STA. The probe request frame includes an indication whether the STA wants to scan multiple antenna beams from the AP. The probe response frame includes a
field to identify a total number of antenna beams on which a transmission will be made and a field to identify the beam that is currently being transmitted on.

A method for supporting use of a smart antenna in a WLAN including an AP and a STA begins by selecting an antenna beam by the AP to use for communication with the STA. The selected beam information is sent from the AP to the STA. A packet is transmitted from the STA to the AP, the packet including the selected beam information, whereby the AP uses the selected beam to receive at least a part of the packet.

A system for supporting use of a smart antenna in a WLAN having an AP and a STA includes a first packet and a second packet. The first packet is sent from the AP to the STA and includes a selected beam indicator, a MAC address of the AP, and a MAC address of the STA. The selected beam indicator identifies an antenna beam selected by the AP to use for communication with the STA. The second packet is sent from the STA to the AP and includes the selected beam indicator, whereby the AP receives at least a part of the second packet via the selected beam.

A system for exchanging smart antenna capability information between a transmitting STA and a receiving STA in a wireless communication system includes an antenna capability information element (IE). The antenna capability IE is sent from the transmitting STA to the receiving STA prior to data transmission between the transmitting STA and the receiving STA. When used in a WLAN, the antenna capability IE can be sent as part of a management frame.

A method for exchanging smart antenna capability information between a transmitting STA and a receiving STA in a wireless communication system includes the steps of: sending antenna capability information from the transmitting STA to the receiving STA, determining whether the receiving STA can support the antenna capabilities of the transmitting STA, adjusting settings at the receiving STA if the receiving STA can support the antenna capabilities of the transmitting STA, and transmitting data from the transmitting STA to the receiving STA using the antenna capabilities if the receiving STA can support the antenna capabilities of the transmitting STA.

A system for implementing smart antenna features in a WLAN includes an AP and a STA. The AP includes a first antenna capability determining device; a first antenna capability information device connected to the first antenna capability determining device, the first antenna capability determining device configured to determine the antenna capabilities of the AP by examining information stored in the first antenna capability information device; a first transmitter/receiver connected to the first antenna capability determining device; a first antenna connected to the transmitter/receiver; and a beam switching device connected to the transmitter/receiver, the beam switching device configured to switch beams of the first antenna. The STA includes a second antenna; a second transmitter/receiver connected to the second antenna, the second transmitter/receiver configured to receive antenna capability information from the AP; a second antenna capability determining device connected to the second transmitter/receiver; a second antenna capability information device connected to the second antenna capability determining device, the second antenna capability determining device configured to compare the antenna capabilities of the AP received from the second transmitter/receiver with the antenna capabilities of the station retrieved from the second antenna capability information device; and a station setting adjustment device connected to the second antenna capability determining device, the station setting adjustment device configured to adjust the settings of the station to utilize smart antenna capabilities.

BRIEF DESCRIPTION OF THE DRAWINGS

A more detailed understanding of the invention may be had from the following description of a preferred embodiment, given by way of example, and to be understood in conjunction with the accompanying drawings, wherein:

Figure 1 is a diagram of a WLAN showing omni-directional and directional antenna beam patterns;
Figure 2 is a diagram of a beacon frame format for identifying antenna beams;
Figure 3 is a timing diagram for passive scanning;
Figure 4 is a flowchart of a method for transmitting a beacon frame in passive scanning;
Figure 5 is a diagram of a probe request frame format for use in active scanning;
Figure 6 is a diagram of a probe response frame format for use in active scanning;
Figure 7 is a timing diagram for active scanning;
Figure 8 is a flowchart of a method for transmitting a probe response frame in active scanning;
Figure 9 is a diagram showing transmission of data packets between an AP and STAs;
Figure 10 is a diagram of a frame format including beam indicator information sent by a STA;
Figure 11 is a diagram of a beam indicator message format sent by an AP;
Figures 12a and 12b are diagrams of frame formats including beam indicator information sent by an AP;
Figures 13a and 13b are diagrams of alternate frame formats including beam indicator information sent by an AP;
Figure 14 is a flowchart of a method for transmitting smart antenna information by an AP and a STA;
Figure 15 is a flow diagram of an example the method shown in Figure 14;
Figure 16 is a diagram of an existing capability information field;
Figure 17 is a diagram of a portion of a frame including an antenna capability IE;
Figure 18 is a diagram of the antenna capability IE shown in Figure 17;
Figure 19 is a flowchart of a method for exchanging antenna capability information;
Figure 20 is a flow diagram of an alternate method for exchanging antenna capability information; and
Figure 21 is a block diagram of a system configured to implement the present invention.

DETAILED DESCRIPTION OF THE PREFERRED EMBODIMENTS

Hereafter, the term "station" (STA) includes, but is not limited to, a wireless transmit/receive unit, a user equipment, a fixed or mobile subscriber unit, a pager, or any other type of device capable of operating in a wireless environment. When referred to hereafter, the term "access point" (AP) includes, but is not limited to, a base station, a Node B, a site controller, or any other type of interfacing device in a wireless environment.
An example solves the beam selection problem for both passive scanning and active scanning. Another example also relates to a method and a signaling scheme that can be implemented in an AP and a STA to enable the use of smart antennas at the AP for the reception of packets from STAs. The method can also be implemented in mesh nodes in the case of a mesh architecture. The present invention addresses antenna capability information exchange between an AP and STA and builds upon the current messages provided by the 802.11 standards and is fully backward compatible.

Passive Scanning

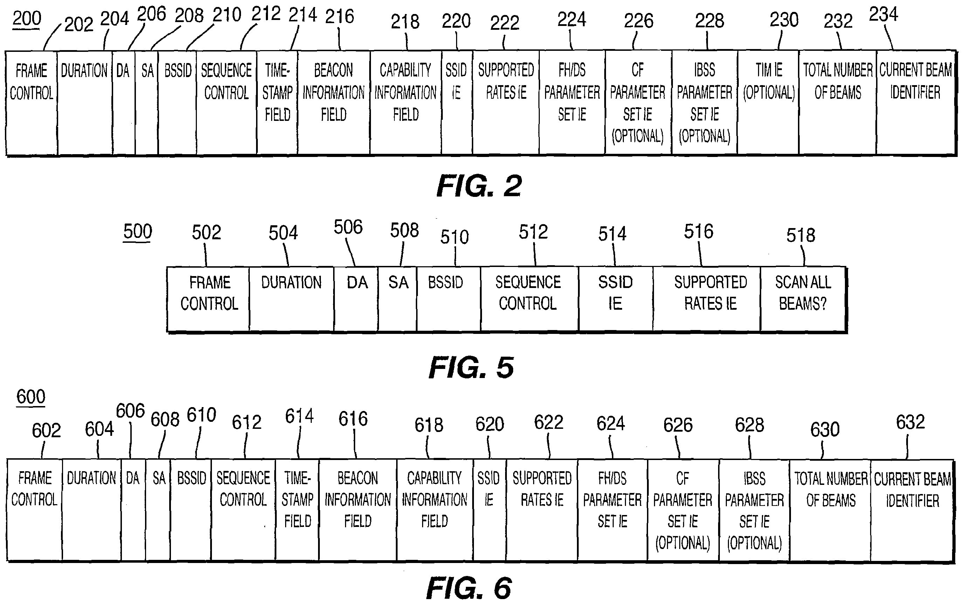

An example provides the signaling and support for an AP to send its beacon on multiple beams. This can be achieved by adding two fields to the WLAN beacon management frame, as shown in Figure 2. The resulting management frame is referred to as an Advanced Antenna (AA) beacon frame 200. Many of the fields of the frame 200 are in the existing beacon frame as defined by the 802.11 standards. These fields include frame control 202, duration 204, destination address (DA) 206, source address (SA) 208, basic service set (BSS) identification (BSSID) 210, sequence control 212, timestamp 214, beacon interval 216, capability information 218, SSID information element (IE) 220, supported rates IE 222, frequency hop (FH)/distribution system (DS) parameter set IE 224, contention free (CF) parameter set IE 226, independent BSS (IBSS) parameter set IE 228, and traffic indication map (TIM) IE 230.
The first new field 232 of the frame 200 indicates to the STA that the beacon frames are sent N times within an AA beacon interval, where N corresponds to the number of beams on which the AP will send the beacon. The second new field 234 identifies the beam that was used to transmit the beacon; i.e., the beam identifier. When receiving any of the multiple AA beacon frames sent by an AP, the STA is able to identify the number of beams (232) included in the beam sweep performed by the AP and it is also able to distinguish the different versions it receives by looking at the beam identifier (234).

It is noted that the AA beacon interval 216 can be set to the same value or different value than the non-AA beacon interval. For the system to be able to offer service to users, the AA beacon interval has to be larger than the beam scan duration, so that there is time left to transmit traffic frames. This could be enforced, for example, as a configuration management rule that would prevent a user from configuring the AP such that the beam scan would take a large portion of the AA beacon interval time.

In an example, the N AA beacon frames 200 are sent successively in time. This is achieved by having the AP use a delay (X) shorter than the DIFS (Distributed Inter-Frame Space) but larger than the SIFS (Short Inter-Frame Space) when trying to access the wireless medium between the transmission of two beacon frames. Any value of X between SIFS and DIFS can be used. It should be noted that the AP would still need to wait for one entire DIFS when accessing the wireless medium to transmit the first of the N beacon frames. This places an upper bound on the maximum amount of time a STA would need to scan the medium once it detected one of the N beacons advertised by an AP; whereby:

$$\text{Upper bound} = (N - 1) \times (\text{beacon\_duration} + X) \qquad \text{Equation 1}$$

 In other words, this prevents a STA from scanning a channel for an undetermined amount of time without ever knowing if all N beacons have been transmitted by the AP.

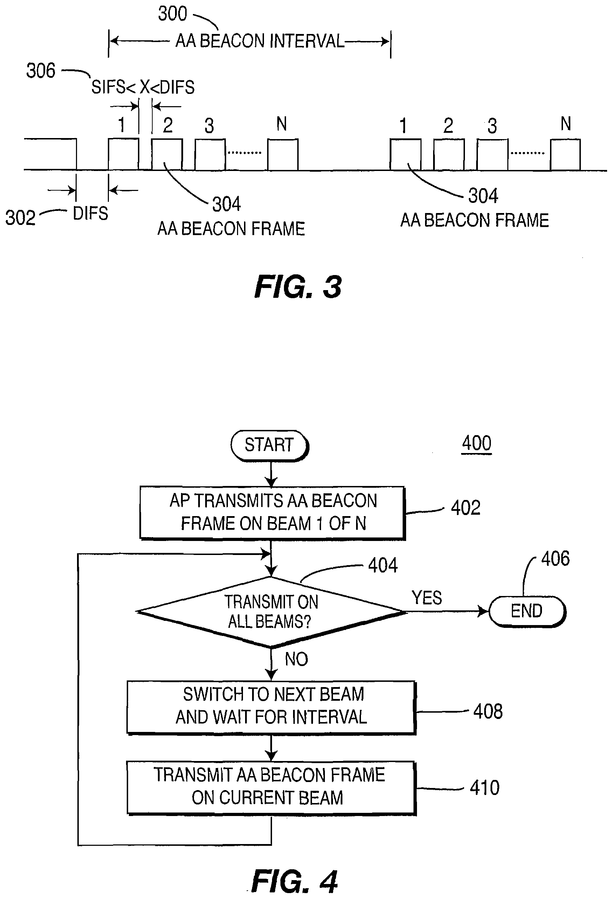

The timing diagram for the passive scanning is shown in Figure 3. Before the AP begins the AA beacon interval 300, it waits for one DIFS 302. At the start of the AA beacon interval 300, the AP transmits the first beacon frame 304. In between beacon frames 304, the AP waits for the interval X (306), where X is shorter than the DIFS and larger than the SIFS.

A method 400 for transmitting an AA beacon frame in passive scanning is shown in Figure 4. The method 400 begins with the AP transmitting an AA beacon frame 200 on one of N antenna beams, with the current beam identifier 234 set to the current beam (step 402). A determination is made if the AA beacon frame has been transmitted on all N beams (step 404). If the AA beacon frame has been transmitted on all N beams, then the method terminates (step 406). If the AA beacon frame has not been transmitted on all N beams (step 404), then the method waits for the interval X (step 408). The antenna system then switches to the next beam (step 408) and transmits the AA beacon frame 200 on the current beam, with the current beam identifier 234 set to the current beam (step 410) and the method continues with step 404. It is noted that the step of switching to the next beam (step 408) can be performed either before or after waiting for the interval X.

The determination used by the STA whether to associate to the AP is implementation specific. One method is to use the power level or SNR perceived on the beacons to select the AP to associate to. An example allows a STA to use this method while fully capitalizing on the fact that the AP is equipped with an advanced antenna system.

Active Scanning

An example also addresses active scanning by allowing a STA to request the AP to send probe responses on multiple beams. This can be achieved by adding a new field to the WLAN probe request frame. The resulting frame is shown in Figure 5 and is referred to as an AA probe request frame 500. Many of the fields of the frame 500 are in the existing probe request frame as defined by the 802.11 standards. These fields include frame control 502, duration 504, DA 506, SA 508, BSSID 510, sequence control 512, SSID IE 514, and supported rates IE 516. The new field 518 of the frame 500 provides an indication to the AP (as a yes or no value) that the STA wants to scan all beams of the AP.

In addition, two new fields are added to the WLAN probe response frame. The resulting frame is shown in Figure 6 and is referred to as an AA probe response frame 600. Many of the fields of the frame 600 are in the existing probe response frame as defined by the 802.11 standards. Fields 602-628 of the frame 600 are the same as fields 202-228 of the frame 200.

The first new field 630 of the frame 600 indicates to the STA that the AA probe responses are sent N times within an AA beacon interval, where N corresponds to the number of beams on which the AP will send the probe response. The second new field 632 identifies the beam that was used to transmit the AA probe response; this is the beam identifier. An AP equipped with an AA system responds to the AA probe request by sending multiple (N) AA probe responses to the STA.

In an example, the N AA probe responses are sent successively in time. This is achieved by having the AP use a delay (X) shorter than the DIFS but larger than the SIFS when trying to access the wireless medium between the transmission of two AA probe responses. It should be noted that the AP would still need to wait for one entire DIFS when accessing the wireless medium to transmit the first of the N probe responses. This places an upper bound on the maximum amount of time a STA would need to wait once it received one of the N AA probe responses sent by an AP; whereby:

$$\text{Upper bound} = (N-1) \times (\text{probe response duration} + X) \qquad \text{Equation 2}$$

The timing diagram for the active scanning is shown in Figure 7. After the STA sends the AA probe request frame 700, the AP waits for one DIFS 702 before sending the first AA probe response frame 704. In between probe response frames 704, the AP waits for the interval X (706), where X is shorter than the DIFS and larger than the SIFS.

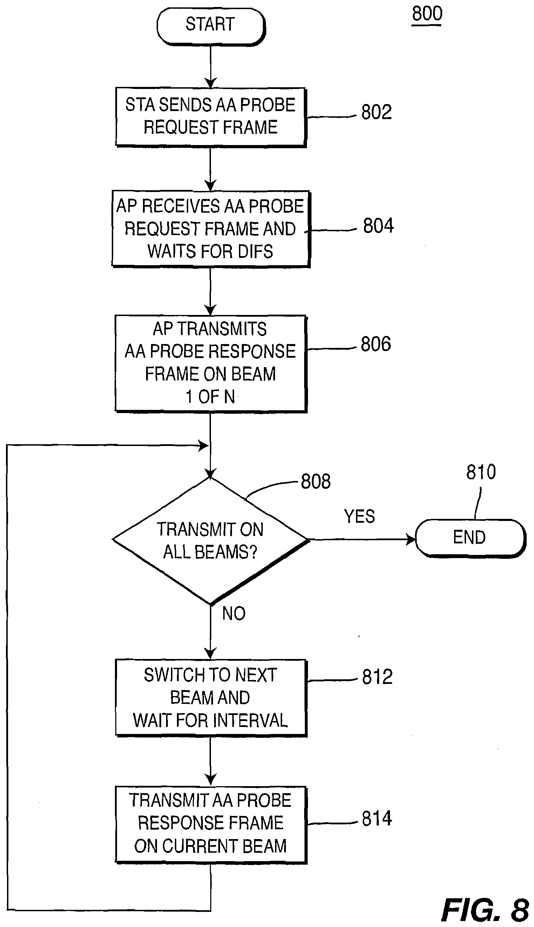

A method 800 for transmitting an AA probe response frame in active scanning is shown in Figure 8. The method 800 begins with the STA sending an AA probe request frame 500, including setting the indicator 518 to scan all beams of the AP (step 802). The AP receives the AA probe request frame and waits for the DIFS period (step 804). The AP transmits an AA probe response frame 600 on one of N antenna beams, with the current beam identifier 632 set to the current beam (step 806). A determination is made if the AA probe response frame has been transmitted on all N beams (step 808). If the AA probe response frame has been transmitted on all N beams, then the method terminates (step 810). If the AA probe response frame has not been transmitted on all N beams (step 808), then the method waits for the interval X (step 812). The antenna system then switches to the next beam (step 812) and transmits the AA probe response frame 600 on the current beam, with the current beam identifier 632 set to the current beam (step 814) and the method continues with step 808. It is noted that the step of switching to the next beam (step 812) can be performed either before or after waiting for the interval X.

In prior art systems, the decision made by a STA as to which AP to associate to could not take into account the radio link gain obtained from the advanced antenna structure at the AP. This meant that the data collected from scanning the RF environment, either passively or actively, where the beacon frames and probe responses are sent by APs in an omni-directional fashion, could lead a STA to associate to an AP that would offer worse performance than another AP, had the gains from the AA systems been taken into account.

With the above example, the data collected by a STA when scanning the RF environment allows it to estimate which AP will be able to provide the best radio link, taking into consideration the gains that the AA systems will offer when traffic frames are transmitted.

Beam Indicator

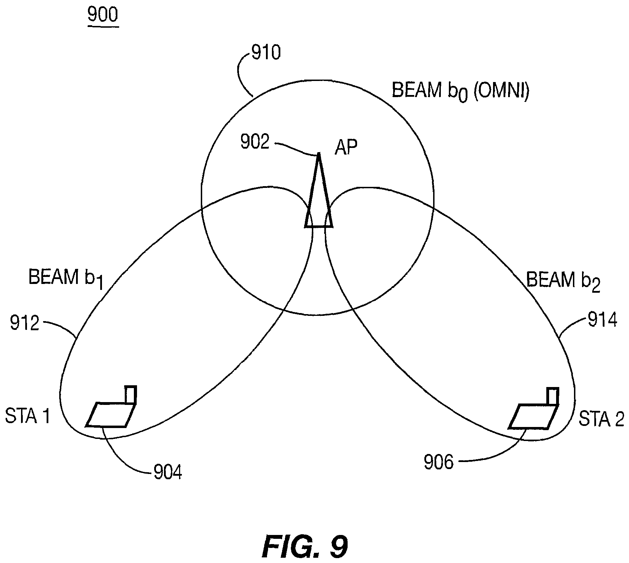

Figure 9 is a diagram showing a system 900 operating in accordance with an example. The system 900 includes an AP 902, a first STA (STA 1) 904 and a second STA (STA 2) 906. The AP 902 transmits on an omni-directional beam (or pattern; bo) 910, a first directional beam ($b_1$) 912 with STA 1 904, and a second directional beam ($b_2$) 914 with STA 2 906. While the omni-directional beam 910 may be able to be received by STA 1 904 and STA 2 906 (albeit faintly), the directional beams 912, 914 are better choices.

A new field, hereinafter called a "beam indicator", is added after the Physical Layer Convergence Protocol (PLCP) header of most of the packets sent from a STA to an AP, indicating to the AP which of its beams (or antennas) it should select to receive the remainder of the packet (the MAC protocol data unit (PDU)). It is noted that the beam indicator does not need to be sent with all packets from the STA to the AP because certain packets (such as an acknowledgement (ACK) or a CTS) are expected to be received by the AP from a particular STA. If the AP knows in advance which STA will be sending the next packet, it can select the optimal beam for receiving that packet, and the beam indicator is not necessary. However, the beam indicator may also be transmitted in those packets.

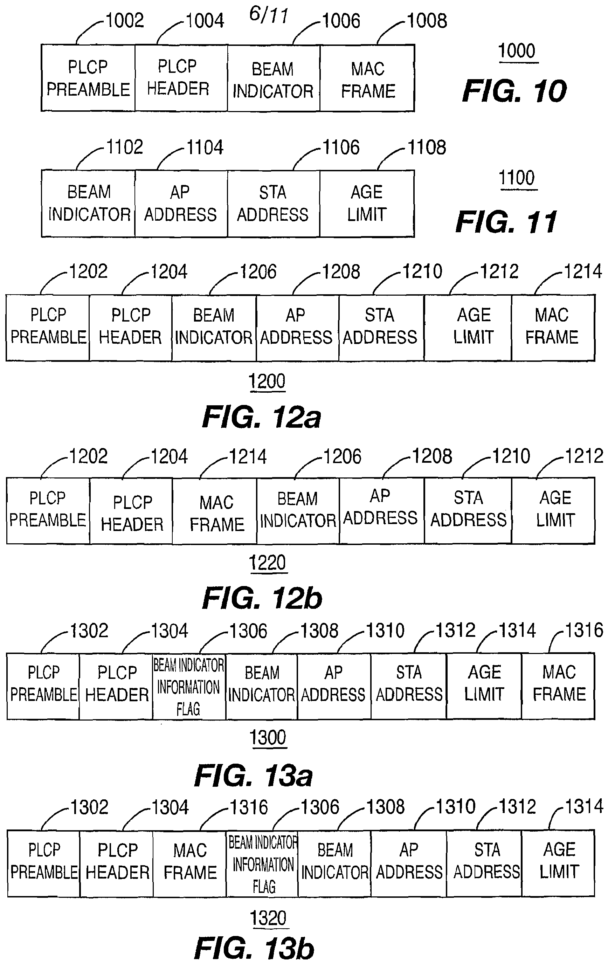

Figure 10 is a diagram of a frame format 1000 including the beam indicator information sent by a STA. The frame 1000 is a modified version of a PLCP PDU (PPDU) and includes a PLCP preamble 1002, a PLCP header 1004, a beam indicator field 1006, and a MAC frame 1008.

This information is provided by the STA transmitting the packet 1000, at the minimum data rate. The AP uses its omni-directional antenna to decode the PLCP header 1004 and the beam indicator field 1006. After decoding the beam indicator field 1006, the AP selects the corresponding beam to receive the remainder of the packet 1008, without having to know the identity of the STA sending the packet 1000.

The beam indicator 1006 is an integer between 0 and $N_{amax}$, where $N_{amax}$ is the maximum number of beams that the AP can use. The value of $N_{amax}$ may be either fixed for all devices compatible with the system, or signaled by the AP in beacon frames, probe response frames, or other management frames. Preferably, $N_{amax}$ is a relatively small integer (i.e., 7 or 15) so as to limit the number of additional bits required for the beam indicator field 1006. One of the values is preferably reserved as a default value for situations when the STA does not know what value to use in the beam indicator field 1006. When this default value is used, the AP may simply use a beam that is not pointed in a specific direction (such as an omni-directional pattern).

The STA determines which value to use in the beam indicator field 1006 based on information provided by the AP in prior AP-to-STA signaling. The required information for this signaling consists of the beam indicator itself, along with the AP and STA MAC addresses. Optionally, an "age limit" may be added to indicate to the STA a maximum time beyond which the beam indicator information is deemed unreliable or invalid. The age limit may be a fixed value, or may be signaled from beacon frames, probe response frames, or other management frames. In the latter case, the age limit may be set adaptively by the AP based on STA mobility considerations.

There are several signaling possibilities for the AP to transfer the beam indicator information to the STA. One method is for the AP to send a special packet (a beam indicator message) containing only the information required for this purpose (AP and STA addresses, beam indicator, optional age limit). Figure 11 is a diagram of a beam indicator message 1100 sent by an AP. The message 1100 includes a beam indicator field 1102, an AP address field 1104, a STA address field 1106, and an optional age limit field 1108. The order of the fields 1102-1108 is exemplary, and the fields 1102-1108 of the message 1100 can be in any order.

In a unicast situation, the STA preferably sends back an ACK so that the AP can re-transmit the packet 1100 if the STA did not successfully receive it. If the AP has to update the beam indicator for several STAs, it may send a multicast message for these STAs containing their respective beam indicator values.

Another signaling possibility is for the AP to insert or piggyback the required information onto a packet containing other data destined to the STA. The information could be added after the PLCP header, after the MAC PDU, or as another field in the MAC header. Figures 12a and 12b are diagrams of frame formats 1200, 1220 including the beam indicator information sent by an AP. The frames 1200, 1220 are modified versions of the PPDU.

Figure 12a shows a frame 1200 that adds the beam indicator information after the PLCP header. The frame 1200 includes a PLCP preamble 1202, a PLCP header 1204, a beam indicator field 1206, an AP address field 1208, a STA address field 1210, an optional age limit field 1212, and a MAC frame 1214.

Figure 12b shows a frame 1220 that adds the beam indicator information after the MAC frame 1214. The fields of the frame 1220 are the same as the frame 1200, with the difference being the order of the fields.

Another signaling possibility is to add a flag indicating whether the beam indicator information is present or not. This flag would allow the AP to not send the beam indicator information in every packet destined to the STA. The beam indicator information can be sent periodically (for example, once every five seconds) and/or on an event driven basis (for example, on a change in the transmitted beam at the AP to a certain STA).

Figures 13a and 13b are diagrams of alternate frame formats 1300, 1320 including the beam indicator information sent by an AP, incorporating the beam indicator information flag. The frames 1300, 1320 are modified versions of the PPDU. Figure 13a shows a frame 1300 including a PLCP preamble 1302, a PLCP header 1304, a beam indicator information flag 1306, a beam indicator field 1308, an AP address field 1310, a STA address field 1312, an optional age limit field 1314, and a MAC frame 1316. The flag 1306 is set only if the beam indicator information (fields 1308-1314) is provided in the frame 1300.

Figure 13b shows a frame 1320 that adds the beam indicator information after the MAC frame 1316. The fields of the frame 1320 are the same as the frame 1300, with the difference being the order of the fields.

The STA fills the beam indicator field 1006 in the STA-to-AP transmissions (packet 1000) with the latest beam indicator (1102, 1206, 1308) signaled by the AP for this STA, if this latest signaling was received before its age limit expired (or at all). Otherwise, the STA fills the beam indicator field 1006 with the default value, as mentioned above. For each value of the beam indicator, the AP knows which of its beams (or antennas) the indicator corresponds to; the STA does not need to know this correspondence.

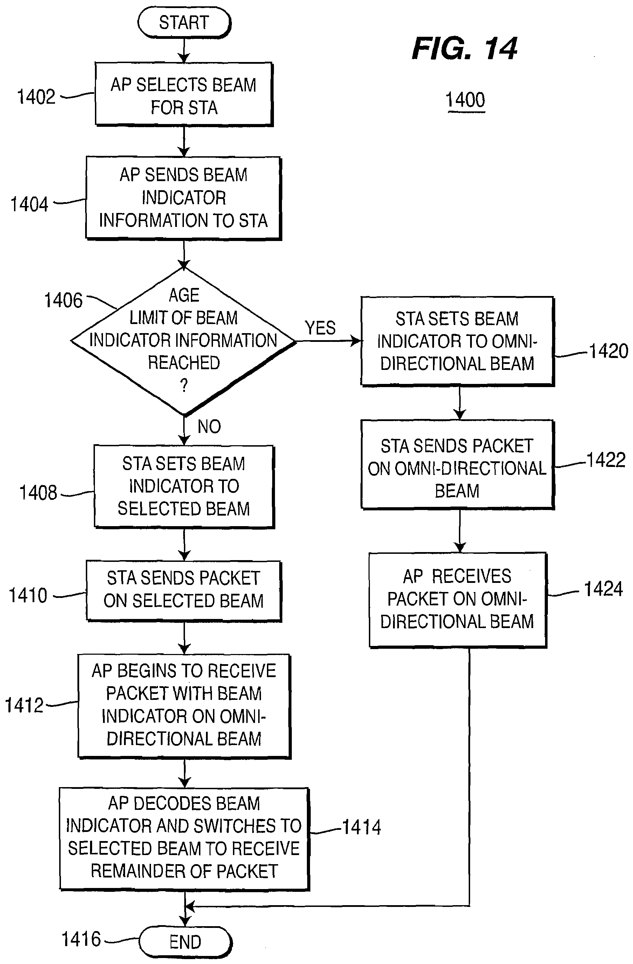

Figure 14 is a flowchart of a method 1400 for transmitting smart antenna information by an AP and a STA. The method 1400 begins by the AP selecting a beam for communication to the STA and selecting the beam indicator corresponding to the selected beam (step 1402). Preferably, although not mandatory, the AP chooses the beam that maximizes the signal level or the signal-to-interference ratio (SIR) at its receiver. There are a variety of methods by which the AP can learn which beam maximizes the SIR for a specific STA.

For example, the AP may try different beams when receiving packets that are expected from a particular STA, and pick the beam that resulted in the best quality of the received signal. Examples of expected packets include: an ACK following the transmission of a data packet to a particular STA, and a CTS packet following the transmission of an RTS packet to a particular STA. With expected packets, it may not be necessary for the STA to add the beam indicator field 1006 after the PLCP header 1004 because the packets are expected by the AP to be sent by a certain STA, and therefore the AP would already know which beam to use.

The AP then sends the beam indicator information to the STA (step 1404). The beam indicator information (as explained in greater detail above) includes the beam indicator, the AP's address, the STA's address, and an optional age limit for expiration of the beam indicator information. The method 1400 assumes that the age limit is present in the beam indicator information.

A determination is made by the STA if the age limit of the beam indicator information has been reached; i.e.,

whether the beam indicator information is still valid (step 1406). If the age limit has not been reached, then the STA sets the beam indicator for a packet to be transmitted to the selected beam (step 1408). The STA sends the packet with the beam indicator information on the selected beam (step 1410). The AP begins to receive the packet from the STA on the omni-directional beam (step 1412). The AP decodes the beam indicator information contained in the packet and switches the antenna to the selected beam to receive the remainder of the packet (step 1414). The method then terminates (step 1416).

If the age limit of the beam indicator information has been reached; i.e., the beam indicator information is no longer valid (step 1406), then the STA sets the beam indicator for a packet to be transmitted to the omni-directional beam (or pattern; step 1420). The STA then sends the packet on the omni-directional beam (step 1422). The AP receives the packet on the omni-directional beam (step 1424) and the method terminates (step 1416). Because the packet is being transmitted on the omni-directional beam (since the packet from the STA does not include the beam indicator information or the STA has set the beam indicator to the default value), there is no need for the AP to change its antenna beam.

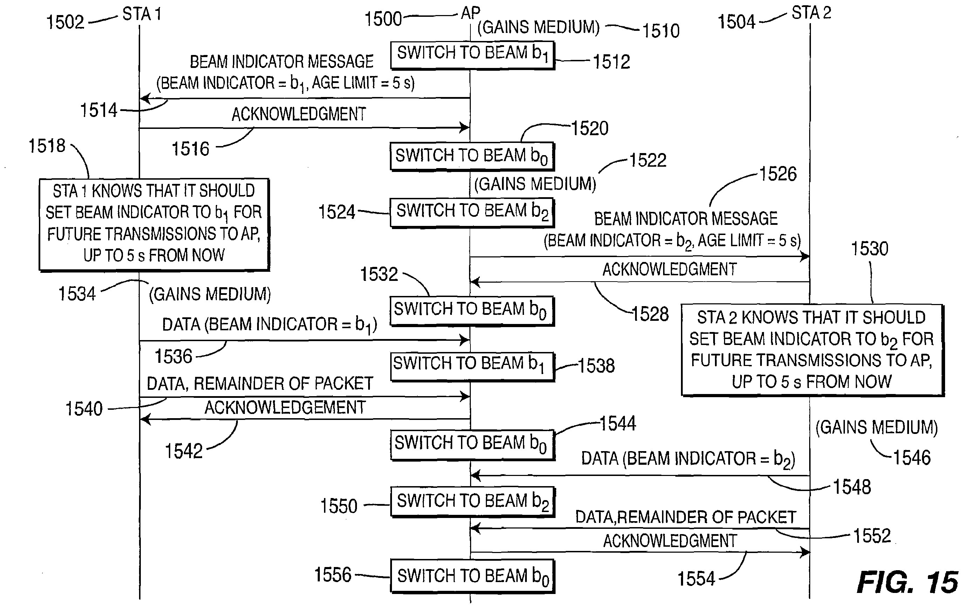

Figure 15 shows an example of the method 1400. In this example, it is assumed that the AP 1500 has already decided that the best beams for communicating with STA 1 1502 and STA 2 1504 are $b_1$ and $b_2$, respectively (as shown in Figure 9).

Figure 15 shows a possible sequence of events where STA 1 1502, STA 2 1504, and the AP 1500 communicate with each other. First, the AP desires to transmit a packet to STA 1. After gaining access to the medium (step 1510), the AP switches to beam $b_1$ (step 1512) and transmits a data packet to STA 1 including a beam indicator message, with the beam indicator ($b_1$) and an age limit for the use of this beam indicator (five seconds; step 1514). STA 1 then sends an ACK to the AP (step 1516). From that time (and up to five seconds from that time), STA 1 knows that if it has to transmit a packet (1000, as shown in Figure 10) to the AP, it should set the beam indicator field (1006) to $b_1$ (step 1518). After receiving the ACK from STA 1, the AP switches its antenna to an omni-directional pattern ($b_0$; step 1520).

Next, the AP gains access to the medium again (step 1522) and switches to beam $b_2$ (step 1524) in order to transmit a packet to STA 2, including a beam indicator message, with the beam indicator ($b_2$) and an age limit for the use of this beam indicator (five seconds; step 1526). STA 2 then sends an ACK to the AP (step 1528). STA 2 knows that it should set the beam indicator field (1006) to $b_2$ for any packet it transmits to the AP (other than an ACK or a CTS), for up to five seconds from that time (step 1530). After receiving the ACK from STA 2, the AP switches its antenna to an omni-directional pattern ($b_0$; step 1532).

STA 1 then gains access to the medium (step 1534) and transmits a data packet to the AP with the beam indicator field (1006) set to $b_1$ (assuming less than five seconds has elapsed; step 1536). After decoding the beam indicator field, the AP immediately switches to beam $b_1$ (step 1538) to decode the remainder of the packet (step 1540). After the end of the packet reception, the AP sends an ACK to STA 1 (step 1542) and switches its antenna to the omni-directional pattern ($b_0$; step 1544).

Then STA 2 gains access to the medium (step 1546) and transmits a data packet to the AP with the beam indicator field (1006) set to $b_2$ (assuming less than five seconds has elapsed; step 1548). After decoding beam indicator field, the AP immediately switches to beam $b_2$ (step 1550) to decode the remainder of the packet (step 1552). After the end of the packet reception, the AP sends an ACK to STA 1 (step 1554) and switches its antenna to the omni-directional pattern ($b_0$; step 1556).

It is noted that if the age limit of the beam indicator information has expired (five seconds in this example), a STA (either STA 1 or STA 2) would set the beam indicator field (1006) to $b_0$ (the default value).

An example allows taking advantage of the smart antenna at the AP without resulting in any major inconvenience. The addition of the beam indicator field in the PLCP header does not result in excessive overhead, since the number of possible beams can usually be limited to eight or less (e.g., three or four bits for the beam indicator field).

For backward compatibility purposes, a field of the PLCP header may be given a new value for the packets transmitted from STAs implementing an example, so that the AP can determine if an incoming packet was transmitted from a STA implementing the example or not. For example, one of the currently reserved bits in the "service" field of the PLCP header could be used to indicate whether the STA implements this example (and therefore if there will be a beam indicator field after the PLCP header). If not, the AP knows that it should not expect the beam indicator field after the PLCP header and could simply use the omni-directional pattern to decode the remainder of the packet.

The example also applies in the case of a mesh architecture where a mesh node is susceptible of receiving packets from more than one other mesh node. In that case, a mesh node plays the role of a STA and of an AP as described above. This means that a mesh node A uses the beam indicator field when transmitting to another mesh node B, using the value of the beam indicator that mesh node B has previously signaled to mesh node A. Conversely, mesh node B uses the beam indicator field when transmitting to mesh node A, using the value of the beam indicator that mesh node A has previously signaled to mesh node B.

As an alternative to having a beam indicator field after the PLCP header, the STA could add its address after the PLCP header. This is not as efficient a solution because the STA address is 48 bits long, compared with three or four bits for the beam indicator. Another alternative would be to replace the beam indicator field with an arbitrary STA index assigned by the AP to the STA upon association and/or higher layer signaling thereafter. The STA index could be relatively short (less than ten bits at its maximum value), depending on the maximum number of associated STAs. The AP would look up and use the current best beam for the STA index specified in the preamble. The AP would not need to then signal a beam indicator to the STA in every AP-to-STA packet, but there would be more additional bits after the PLCP preamble.

Antenna Capability Information

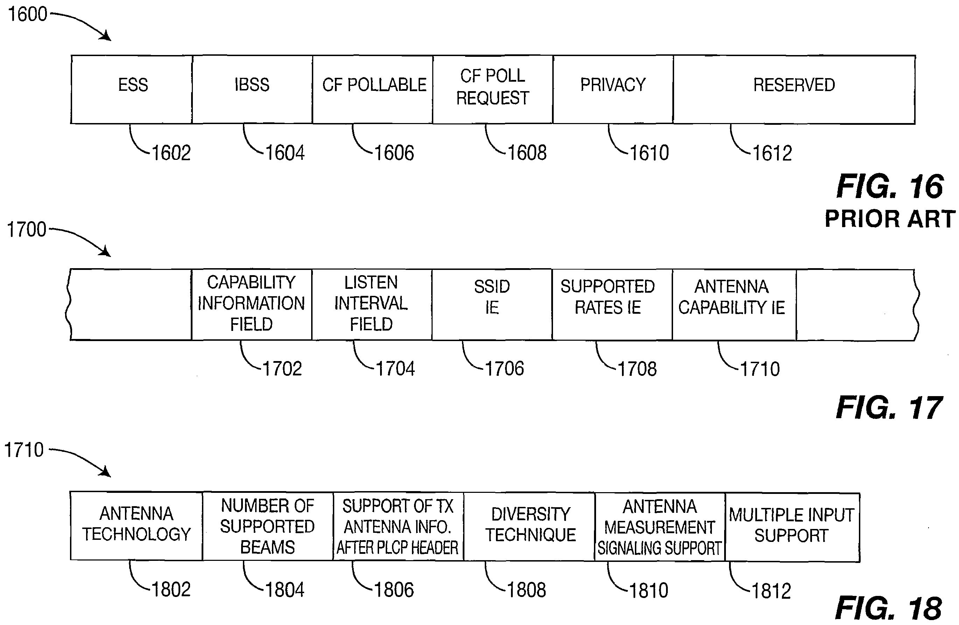

A capability information field 1600, as used in a beacon frame, an association request frame, an association response frame, and a probe response frame, has some reserved bits, as shown in Figure 16. The capacity information field 1600 includes an extended service set (ESS) subfield 1602, an IBSS subfield 1604, a contention free (CF) pollable subfield 1606, a CF poll request subfield 1608, a privacy subfield 1610, and a number of reserved bits 1612. In the 802.11 standards, the subfields 1602-1610 are each one bit long and there are 11 reserved bits 1612.

The present invention utilizes one of the reserved bits 1612 for transferring antenna capability information by using one of the reserved bits as a flag to indicate whether antenna capability information will be transmitted. The details of an antenna's capabilities are part of an additional IE, which is attached to the end of the packet if the antenna capability information flag is set.

The antenna capability information IE can be included as part of an association request frame, an association response frame, a probe request frame, and a probe response frame. An example of a portion of an association request frame 200 including this new IE is shown in Figure 17. The frame 1700 includes a capability information field 1702, a listen interval field 1704, a SSID IE 1706, a supported rates IE 1708, and an antenna capability IE 1710. Alternatively, the antenna capability IE 1710 can be added to any management frame, such as a reassociation request, a reassociation response, or a beacon; to any control frame; or to data packets. In a preferred embodiment, the antenna capability IE 1710 is sent in a management frame. If the antenna capability IE 1710 is added to the probe request frame and the probe response frame, a STA can use this information before initiating an association procedure with an AP.

The antenna capability IE 1710 is shown in detail in Figure 18 and includes, but is not limited to, an antenna technology field 1802, a number of supported beams field 1804, a field to indicate support of transmit antenna information after the PLCP header 1806, a diversity technique field 1808, a field to indicate support of antenna measurement signaling 1810, and a field to indicate support for multiple inputs 1812. Additional antenna capability information may also be included in the IE 1710.

In one embodiment, the minimum amount of information to be exchanged includes the antenna technology field 1802, and the rest of the fields may be optional. It may be possible to derive the remaining fields (i.e., fields 1804-1812) once the antenna technology type is known.

After one side (either AP or STA) receives the antenna capability information from the transmitting side, the receiving side adjusts local settings for transmission and/or reception such as number of antennas used, diversity method, smart antenna technologies used for transmission/reception, and extra antenna measurements.

In the event that the receiving side cannot support the antenna capabilities of the transmitting side, the transmitting side will not be able to use the particular antenna features. Certain antenna technologies will operate properly only if both the transmitting side and the receiving side are capable of utilizing the technology. One example is MIMO technology, which only works if supported on both sides.

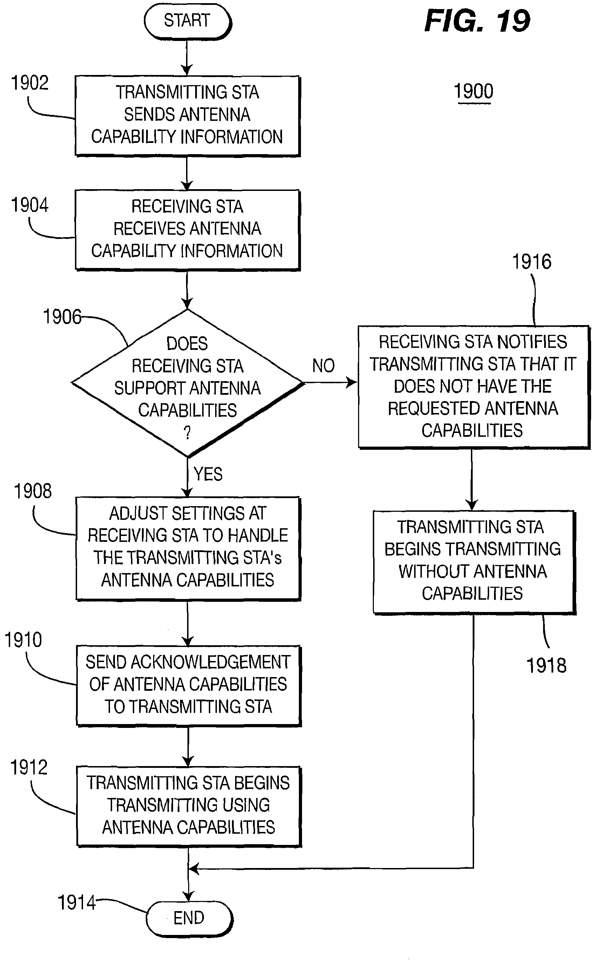

Figure 19 shows a method 1900 for exchanging antenna capability information. For purposes of discussion of the method 1900, the terms "transmitting STA" and "receiving STA" are used. It is noted that both the transmitting STA and the receiving STA can be an AP or a STA, such that an exchange of antenna capability information can occur between an AP and a STA or between two STAs, in either direction.

The method 1900 begins with the transmitting STA sending its antenna capability information to the receiving STA in an antenna capability IE (step 1902). The receiving STA receives the antenna capability IE (step 1904) and determines whether it can support the requested antenna capabilities. If the receiving STA can support the antenna capabilities of the transmitting STA (step 1906), then the receiving STA adjusts its settings to handle the transmitting STA's antenna capabilities (step 1908). The receiving STA sends an acknowledgement of its antenna capabilities to the transmitting STA (step 1910).

In an alternate embodiment of the method 1900, the acknowledgement is sent to the transmitting STA before the receiving STA adjusts its settings (i.e., steps 1908 and 1910 are switched). While this message is an acknowledgement of the receiving STA's antenna capabilities, it is not necessarily an ACK signal. If the receiving STA has some, but not all, of the capabilities of the transmitting STA, negotiation of capabilities can occur to achieve a common set of capabilities to be used. In a preferred embodiment, the capabilities used will be the smaller capability set belonging to both STAs.

The transmitting STA begins transmitting using the communicated antenna capabilities (step 1912) and the method terminates (step 1914).

If the receiving STA does not support the transmitting STA's antenna capabilities (step 1906), then the receiving STA notifies the transmitting STA that it does not have the requested antenna capabilities (step 1916). The transmitting STA begins transmitting without using the requested antenna capabilities (step 1918) and the method terminates (step 1914).

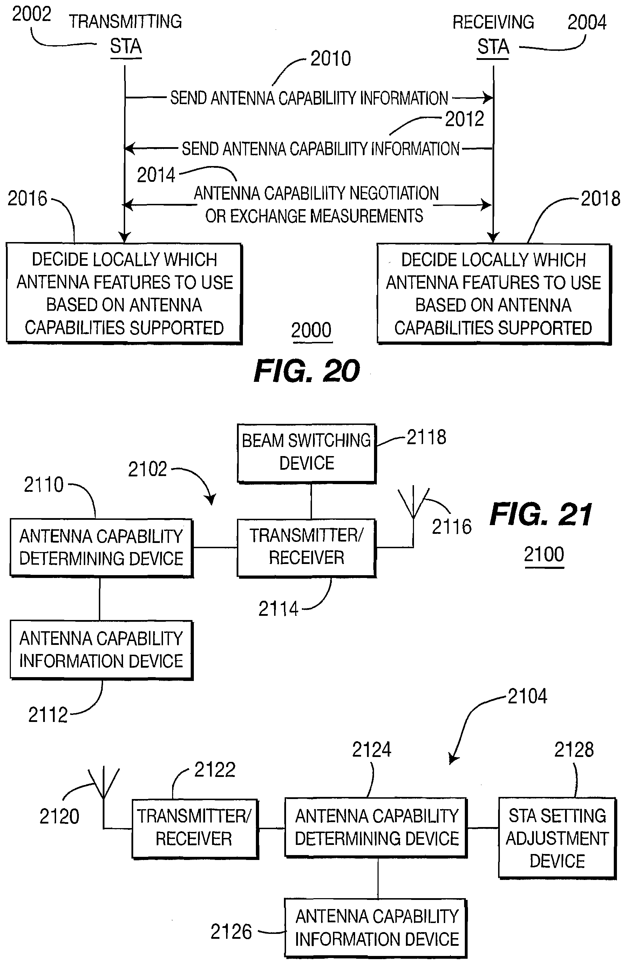

Figure 20 is a flow diagram of an alternate method 2000 for exchanging antenna capability information between a transmitting STA 2002 and a receiving STA 2004. The transmitting STA 2002 sends its antenna capability information to the receiving STA 2004 (step 2010). The receiving STA 2004 sends its antenna capability information to the transmitting STA 2002 (step 2012). It is noted that steps 2010 and 2012 can be performed in reverse order. The ordering of steps 2010 and 2012 is not critical, as long as the antenna capability information is exchanged between the transmitting STA 2002 and the receiving STA 2004. Optionally, the transmitting STA 2002 and the receiving STA 2004 can negotiate antenna capabilities to find a common antenna capability set or can exchange measurement information (step 2014). This optional step can be used to refine the set of antenna features to be used.

After the exchange of antenna information (steps 2010, 2012) and any additional information exchange (step 2014), both the transmitting STA 2002 and the receiving STA 2004 decide locally which antenna features to use based on the antenna capabilities that are supported locally (steps 2016, 2018).

While the transfer of antenna capability information has been described in terms of a WLAN, the principles of this concept are equally applicable to any type of wireless communication system.

System Implementation

Figure 21 is a block diagram of a system 2100 configured to implement the various aspects of the present invention. The system 2100 includes an AP 2102 and a STA 2104. The AP 2102 includes an antenna capability determining device 2110 which determines the antenna capabilities of the AP 2102 by examining antenna capability information stored in an antenna capability information device 2112 that is connected to the antenna capability determining device 2110. The antenna capabilities of the AP 2102 are sent out by a transmitter/receiver 2114 connected to the antenna capability determining device 2110 and an antenna 2116 connected to the transmitter/receiver 2114. A beam switching device 2118 is connected to the transmitter/receiver 2114 and is used to switch the beams of the antenna 2116.

The STA 2104 receives the antenna capability information of the AP 2102 via an antenna 2120 and a transmitter/receiver 2122 connected to the antenna 2120. An antenna capability determining device 2124 is connected to the transmitter/receiver 2122 and compares the antenna capabilities of the AP 2102 with the antenna capability information of the STA 2104 by accessing an antenna capability information device 2126 which is connected to the antenna capability determining device 2124. The antenna capability determining device 2124 is connected to a STA setting adjustment device 2128, which adjusts the settings of the STA 2104 in order to utilize the smart antenna capabilities.

It is noted that a negotiation of antenna capabilities between the AP 2102 and the STA 2104 can occur via the respective antenna capability determining devices 2110, 2124. While the system 2100 has been described as using an AP 2102, the AP 2102 can instead be another STA in the system 2100.

Although the features and elements of the present invention are described in the preferred embodiments in particular combinations, each feature or element can be used alone (without the other features and elements of the preferred embodiments) or in various combinations with or without other features and elements of the present invention. While specific embodiments of the present invention have been shown and described, many modifications and variations could be made by one skilled in the art without departing from the scope of the invention.

**Claims**

**1.** A first Institute of Electrical and Electronics Engineers, IEEE, 802.11 station, STA, (102; 110, 120) for exchanging antenna capability information, the first IEEE 802.11 STA (102; 110, 120) comprising:

a transmitter configured to transmit a probe request frame that contains a first antenna capability information element (1710) that indicates a plurality of antenna capabilities of the first IEEE 802.11 STA (102; 110, 120); and
a receiver configured to receive a probe response frame that contains a second antenna capability information element (1710) that indicates a plurality of antenna capabilities of a second IEEE 802.11 STA (102; 110, 120).

**2.** The first IEEE 802.11 STA of claim 1, wherein the first or the second antenna capability information element (1710) further includes a field that indicates support for antenna measurement signaling.

**3.** The first IEEE 802.11 STA of claim 1, wherein the second IEEE 802.11 STA (102; 110, 120) is an access point, AP, in a wireless local area network, WLAN.

4. The first IEEE 802.11 STA of claim 1, wherein the first or the second antenna capability information element (1710) includes an antenna technology field (1802).

5. The first IEEE 802.11 STA of claim 4, wherein the first or the second antenna capability information element (1710) further includes a field (1810) that indicates support for antenna measurement signaling, and wherein the field is derived by the first IEEE 802.11 STA (102; 110, 120) from the antenna technology field.

6. The first IEEE 802.11 STA of claim 1, wherein the probe response frame is received at any time before association between the first IEEE 802.11 STA (102; 110, 120) and the second IEEE 802.11 STA (102; 110, 120) or at any time after a data transfer between the first IEEE 802.11 STA (102; 110, 120) and the second IEEE 802.11 STA (102; 110, 120).

7. The first IEEE 802.11 STA of claim 1 further comprising:
a processor configured to adjust antenna settings of the first IEEE 802.11 STA (102; 110, 120) to use a set of antenna capabilities belonging to both the first and second IEEE 802.11 STAs on a condition that the second IEEE 802.11 STA (102; 110, 120) supports at least one of the indicated plurality of antenna capabilities.

8. A method for exchanging antenna capability information at a first Institute of Electrical and Electronics Engineers, IEEE, 802.11 station, STA, (102; 110, 120), the method comprising:

transmitting a probe request frame that contains a first antenna capability information element (1710) that indicates a plurality of antenna capabilities of the first IEEE 802.11 STA (102; 110, 120); and
receiving a probe response frame that contains a second antenna capability information element (1710) that indicates a plurality of antenna capabilities of a second IEEE 802.11 STA (102; 110, 120).

9. The method of claim 8, further comprising:
adjusting settings at the first IEEE 802.11 STA (102; 110, 120) to use a number of supported beams belonging to both the first and second IEEE 802.11 STAs.

10. The method of claim 9, wherein the adjusting includes adjusting at least one setting selected from the group consisting of a number of antennas used, a diversity method, a smart antenna technology used, and additional antenna measurements.

11. The method of claim 9, wherein the receiving is performed prior to the adjusting or is performed after the adjusting.

12. The method of claim 8, further comprising receiving a notification from the second IEEE 802.11 STA (102; 110, 120) that the second IEEE 802.11 STA (102; 110, 120) does not support at least one of the plurality of antenna capabilities.

13. An access point, AP, (110, 120) for exchanging antenna capability information, the AP (110, 120) comprising:

a receiver configured to receive a probe request frame that contains a first antenna capability information element (1710) that indicates a plurality of antenna capabilities of an IEEE 802.11 STA (102; 110, 120); and
a transmitter configured to transmit a probe response frame that contains a second antenna capability information element (1710) that indicates a plurality of antenna capabilities of the AP (110, 120).

14. The AP of claim 13, wherein the first or the second antenna capability information element (1710) further includes a field (1810) that indicates support for antenna measurement signaling.

15. The AP of claim 13, further comprising:
a processor configured to adjust antenna settings of the AP (110, 120) to use a set of antenna capabilities belonging to both the AP (110, 120) and the IEEE 802.11 STA (102; 110, 120) on a condition that the IEEE 802.11 STA (102; 110, 120) supports at least one of the indicated plurality of antenna capabilities.

**Patentansprüche**

1. Erste Institute of Electrical and Electronics Engineers, IEEE, 802.11-Station (STA) (102; 110, 120) zum Austauschen von Antennenfähigkeiten-Informationen, wobei die erste IEEE 802.11-STA (102; 110, 120) umfasst:

einen Sender, der dafür konfiguriert ist, einen Sondierungsanforderungs-Frame zu senden, der ein erstes Antennenfähigkeiten-Informationselement (1710) enthält, das mehrere Antennenfähigkeiten der ersten IEEE 802.11-STA (102; 110, 120) angibt; und

einen Empfänger, der dafür konfiguriert ist, einen Sondierungsantwort-Frame zu empfangen, der ein zweites Antennenfähigkeiten-Informationselement (1710) enthält, das mehrere Antennenfähigkeiten einer zweiten IEEE 802.11-STA (102; 110, 120) angibt.

2. Erste IEEE 802.11-STA nach Anspruch 1, wobei das erste oder das zweite Antennenfähigkeiten-Informationselement (1710) des Weiteren ein Feld enthält, das Unterstützung für eine Antennenmessungs-Zeichengabe angibt.

3. Erste IEEE 802.11-STA nach Anspruch 1, wobei die zweite IEEE 802.11 -STA (102; 110, 120) ein Zugangspunkt (Access Point, AP) in einem Wireless Local Area Network (WLAN) ist.

4. Erste IEEE 802.11-STA nach Anspruch 1, wobei das erste oder das zweite Antennenfähigkeiten-Informationselement (1710) ein Antennentechnologiefeld (1802) enthält.

5. Erste IEEE 802.11-STA nach Anspruch 4, wobei das erste oder das zweite Antennenfähigkeiten-Informationselement (1710) des Weiteren ein Feld (1810) enthält, das Unterstützung für Antennenmessungs-Zeichengabe angibt, und wobei das Feld durch die erste IEEE 802.11-STA (102; 110, 120) aus dem Antennentechnologiefeld abgeleitet wird.

6. Erste IEEE 802.11-STA nach Anspruch 1, wobei der Sondierungsantwort-Frame zu einem beliebigen Zeitpunkt vor der Verknüpfung zwischen der ersten IEEE 802.11-STA (102; 110, 120) und der zweiten IEEE 802.11-STA (102; 110, 120) oder zu einem beliebigen Zeitpunkt nach einer Datenübertragung zwischen der ersten IEEE 802.11-STA (102; 110, 120) und der zweiten IEEE 802.11-STA (102; 110, 120) empfangen wird.

7. Erste IEEE 802.11-STA nach Anspruch 1, die des Weiteren umfasst:
einen Prozessor, der dafür konfiguriert ist, Antenneneinstellungen der ersten IEEE 802.11-STA (102; 110, 120) zu justieren, um einen Satz von Antennenfähigkeiten zu verwenden, die sowohl zu der ersten als auch zu der zweiten IEEE 802.11-STA gehören, sofern die zweite IEEE 802.11-STA (102; 110, 120) mindestens eine der angegebenen mehreren Antennenfähigkeiten unterstützt.

8. Verfahren zum Austauschen von Antennenfähigkeiten-Informationen in einer ersten Institute of Electrical and Electronics Engineers, IEEE, 802.11-Station (STA) (102; 110, 120), wobei das Verfahren umfasst:

Senden eines Sondierungsanforderungs-Frames, der ein erstes Antennenfähigkeiten-Informationselement (1710) enthält, das mehrere Antennenfähigkeiten der ersten IEEE 802.11-STA (102; 110, 120) angibt; und
Empfangen eines Sondierungsantwort-Frames, der ein zweites Antennenfähigkeiten-Informationselement (1710) enthält, das mehrere Antennenfähigkeiten einer zweiten IEEE 802.11-STA (102; 110, 120) angibt.

9. Verfahren nach Anspruch 8, das des Weiteren umfasst:
Justieren von Einstellungen in der ersten IEEE 802.11-STA (102; 110, 120), um eine Anzahl von unterstützten Beams zu verwenden, die sowohl zu der ersten als auch zu der zweiten IEEE 802.11-STA gehören.

10. Verfahren nach Anspruch 9, wobei das Justieren das Justieren mindestens einer Einstellung umfasst, die aus der Gruppe ausgewählt wird, die aus einer Anzahl von verwendeten Antennen, einem Diversity-Verfahren, einer verwendeten intelligenten Antennentechnologie und zusätzlichen Antennenmessungen besteht.

11. Verfahren nach Anspruch 9, wobei das Empfangen vor dem Justieren durchgeführt wird oder nach dem Justieren durchgeführt wird.

12. Verfahren nach Anspruch 8, das des Weiteren das Empfangen einer Benachrichtigung von der zweiten IEEE 802.11-STA (102; 110, 120) umfasst, dass die zweite IEEE 802.11-STA (102; 110, 120) mindestens eine der mehreren Antennenfähigkeiten nicht unterstützt.

13. Zugangspunkt, AP, (110, 120) zum Austauschen von Antennenfähigkeiten-Informationen, wobei der AP (110, 120) umfasst:

einen Empfänger, der dafür konfiguriert ist, einen Sondierungsanforderungs-Frame zu empfangen, der ein erstes Antennenfähigkeiten-Informationselement (1710) enthält, das mehrere Antennenfähigkeiten einer IEEE 802.11-STA (102; 110, 120) angibt; und

einen Sender, der dafür konfiguriert ist, einen Sondierungsantwort-Frame zu senden, der ein zweites Antennenfähigkeiten-Informationselement (1710) enthält, das mehrere Antennenfähigkeiten des AP (110, 120) angibt.

14. AP nach Anspruch 13, wobei das erste oder das zweite Antennenfähigkeiten-Informationselement (1710) des Weiteren ein Feld (1810) enthält, das Unterstützung für eine Antennenmessungs-Zeichengabe angibt.

15. AP nach Anspruch 13, der des Weiteren umfasst:
einen Prozessor, der dafür konfiguriert ist, Antenneneinstellungen des AP (110, 120) zu justieren, um einen Satz von Antennenfähigkeiten zu verwenden, die sowohl dem AP (110, 120) als auch dem IEEE 802.11-STA (102; 110, 120) gehören, sofern die IEEE 802.11-STA (102; 110, 120) mindestens eine der angegebenen mehreren Antennenfähigkeiten unterstützt.

## Revendications

1. Première station, STA, Institute of Electrical and Electronics Engineers, IEEE, 802.11, (102 ; 110, 120) pour échanger des informations de capacités d'antenne, la première STA IEEE 802.11 (102 ; 110, 120) comprenant :

un émetteur configuré pour transmettre une trame de demande de sonde qui contient un premier élément d'informations de capacités d'antenne (1710) qui indique une pluralité de capacités d'antenne de la première STA IEEE 802.11 (102 ; 110, 120) ; et

un récepteur configuré pour recevoir une trame de réponse de sonde qui contient un deuxième élément d'informations de capacités d'antenne (1710) qui indique une pluralité de capacités d'antenne d'une deuxième STA IEEE 802.11 (102 ; 110, 120).

2. . Première STA IEEE 802.11 selon la revendication 1, dans laquelle le premier ou deuxième élément d'informations de capacités d'antenne (1710) inclut en outre un champ qui indique une prise en charge d'une signalisation de mesure d'antenne.

3. . Première STA IEEE 802.11 selon la revendication 1, dans laquelle la deuxième STA IEEE 802.11 (102 ; 110, 120) est un point d'accès, AP, dans un réseau local sans fil, WLAN.

4. . Première STA IEEE 802.11 selon la revendication 1, dans laquelle le premier ou deuxième élément d'informations de capacités d'antenne (1710) inclut un champ de technologie d'antenne (1802).

5. . Première STA IEEE 802.11 selon la revendication 4, dans laquelle le premier ou deuxième élément d'informations des capacités d'antenne (1710) inclut en outre un champ (1810) qui indique une prise en charge d'une signalisation de mesure d'antenne, et dans laquelle le champ est dérivé par la première STA IEEE 802.11 (102 ; 110, 120) à partir du champ de technologie d'antenne.

6. . Première STA IEEE 802.11 selon la revendication 1, dans laquelle la trame de réponse de sonde est reçue à tout moment avant une association entre la première STA IEEE 802.11 (102 ; 110, 120) et la deuxième STA IEEE 802.11 (102 ; 110, 120) ou à tout moment après un transfert de données entre la première STA IEEE 802.11 (102 ; 110, 120) et la deuxième STA IEEE 802.11 (102 ; 110, 120).

7. . Première STA IEEE 802.11 selon la revendication 1, comprenant en outre :
un processeur configuré pour ajuster des réglages d'antenne de la première STA IEEE 802.11 (102 ; 110, 120) pour utiliser un ensemble de capacités d'antenne appartenant à la fois aux première et deuxième STA IEEE 802.11 à condition que la deuxième STA IEEE 802.11 (102 ; 110, 120) prenne en charge au moins l'une de la pluralité indiquée de capacités d'antenne.

8. . Procédé d'échange d'informations de capacités d'antenne au niveau d'une première station, STA, Institute of Electrical and Electronics Engineers, IEEE, 802.11, (102 ; 110, 120), le procédé comprenant :

la transmission d'une trame de demande de sonde qui contient un premier élément d'informations de capacités d'antenne (1710) qui indique une pluralité de capacités d'antenne de la première STA IEEE 802.11 (102 ; 110, 120) ; et
la réception d'une trame de réponse de sonde qui contient un deuxième élément d'informations de capacités d'antenne (1710) qui indique une pluralité de capacités d'antenne d'une deuxième STA IEEE 802.11 (102 ; 110, 120).

9. . Procédé selon la revendication 8, comprenant en outre :
l'ajustement de réglages au niveau de la première STA IEEE 802.11 (102 ; 110, 120) pour utiliser un nombre de faisceaux pris en charge appartenant à la fois aux première et deuxième STA IEEE 802.11.

10. . Procédé selon la revendication 9, dans lequel l'ajustement inclut l'ajustement d'au moins un réglage sélectionné dans le groupe se composant d'un nombre d'antennes utilisées, d'un procédé de diversité, d'une technologie d'antenne intelligente utilisée, et de mesures d'antennes supplémentaires.

11. . Procédé selon la revendication 9, dans lequel la réception est réalisée avant l'ajustement ou est réalisée après l'ajustement.

12. . Procédé selon la revendication 8, comprenant en outre la réception d'une notification depuis la deuxième STA IEEE 802.11 (102 ; 110, 120) que la deuxième STA IEEE 802.11 (102 ; 110, 120) ne prend pas en charge au moins l'une de la pluralité de capacités d'antenne.

13. . Point d'accès, AP, (110, 120) pour échanger des informations de capacités d'antenne, l'AP (110, 120) comprenant :

un récepteur configuré pour recevoir une trame de demande de sonde qui contient un premier élément d'informations de capacités d'antenne (1710) qui indique une pluralité de capacités d'antenne d'une STA IEEE 802.11 (102 ; 110, 120) ; et
un émetteur configuré pour transmettre une trame de réponse de sonde qui contient un deuxième élément d'informations de capacités d'antenne (1710) qui indique une pluralité de capacités d'antenne de l'AP (110, 120).

14. . AP selon la revendication 13, dans lequel le premier ou deuxième élément d'informations de capacités d'antenne (1710) inclut en outre un champ (1810) qui indique une prise en charge d'une signalisation de mesure d'antenne.

15. . AP selon la revendication 13, comprenant en outre :
un processeur configuré pour ajuster des réglages d'antenne de l'AP (110, 120) pour utiliser un ensemble de capacités d'antenne appartenant à la fois à l'AP (110, 120) et à la STA IEEE 802.11 (102 ; 110, 120) à condition que la STA IEEE 802.11 (102 ; 110, 120) prenne en charge au moins l'une de la pluralité indiquée de capacités d'antenne.

**FIG. 1**

**FIG. 7**

**200**

| Frame Control | Duration (202) | DA (204) | SA (206) | BSSID (208) | Sequence Control (210) | Time-Stamp Field (212) | Beacon Information Field (214) | Capability Information Field (216) | SSID IE (218) | Supported Rates IE (220) | FH/DS Parameter Set IE (222) | CF Parameter Set IE (Optional) (224) | IBSS Parameter Set IE (Optional) (226/228) | TIM IE (Optional) (230) | Total Number of Beams (232) | Current Beam Identifier (234) |
|---|---|---|---|---|---|---|---|---|---|---|---|---|---|---|---|---|

## FIG. 2

**500**

| Frame Control (502) | Duration (504) | DA (506) | SA (508) | BSSID (510) | Sequence Control (512) | SSID IE (514) | Supported Rates IE (516) | Scan All Beams? (518) |
|---|---|---|---|---|---|---|---|---|

## FIG. 5

**600**

| Frame Control (602) | Duration (604) | DA (606) | SA (608) | BSSID (610) | Sequence Control (612) | Time-Stamp Field (614) | Beacon Information Field (616) | Capability Information Field (618) | SSID IE (620) | Supported Rates IE (622) | FH/DS Parameter Set IE (624) | CF Parameter Set IE (Optional) (626) | IBSS Parameter Set IE (Optional) (628) | Total Number of Beams (630) | Current Beam Identifier (632) |
|---|---|---|---|---|---|---|---|---|---|---|---|---|---|---|---|

## FIG. 6

300 —
|←———— AA BEACON INTERVAL ————→|

306 —
SIFS< X<DIFS
→| |←

| 1 | | 2 | 3 | ........ | N |    | 1 | | 2 | 3 | ........ | N |

→| |←
302 — DIFS
— 304                              — 304
AA BEACON FRAME                    AA BEACON FRAME

## FIG. 3

START                              400

AP TRANSMITS AA BEACON
FRAME ON BEAM 1 OF N          — 402

— 404                              — 406

TRANSMIT ON
ALL BEAMS?    —— YES ——→    END

NO

SWITCH TO NEXT BEAM
AND WAIT FOR INTERVAL         — 408

TRANSMIT AA BEACON FRAME
ON CURRENT BEAM               — 410

## FIG. 4

<u>800</u>

```
        ┌─────────────┐
        │    START    │
        └─────────────┘
               │
               ▼
   ┌───────────────────────┐
   │  STA SENDS AA PROBE   │────── 802
   │    REQUEST FRAME      │
   └───────────────────────┘
               │
               ▼
   ┌───────────────────────┐
   │  AP RECEIVES AA PROBE │
   │  REQUEST FRAME AND    │────── 804
   │     WAITS FOR DIFS    │
   └───────────────────────┘
               │
               ▼
   ┌───────────────────────┐
   │     AP TRANSMITS      │
   │  AA PROBE RESPONSE    │────── 806
   │   FRAME ON BEAM       │
   │       1 OF N          │
   └───────────────────────┘
               │
               ▼
            ╱──────╲                       810
           ╱   808  ╲                        │
          ╱  TRANSMIT ╲        YES      ┌─────────┐
          ╲  ON ALL    ╱───────────────▶│   END   │
           ╲ BEAMS?   ╱                 └─────────┘
            ╲────────╱
               │ NO
               ▼
   ┌───────────────────────┐
   │   SWITCH TO NEXT      │────── 812
   │      BEAM AND         │
   │   WAIT FOR INTERVAL   │
   └───────────────────────┘
               │
               ▼
   ┌───────────────────────┐
   │  TRANSMIT AA PROBE    │
   │  RESPONSE FRAME       │────── 814
   │   ON CURRENT BEAM     │
   └───────────────────────┘
```

*FIG. 8*

900

FIG. 9

6/11

| PLCP PREAMBLE | PLCP HEADER | BEAM INDICATOR | MAC FRAME |
|---|---|---|---|

1000

**FIG. 10**

1002 1004 1006 1008

| BEAM INDICATOR | AP ADDRESS | STA ADDRESS | AGE LIMIT |
|---|---|---|---|

1100

**FIG. 11**

1102 1104 1106 1108

| PLCP PREAMBLE | PLCP HEADER | BEAM INDICATOR | AP ADDRESS | STA ADDRESS | AGE LIMIT | MAC FRAME |
|---|---|---|---|---|---|---|

1202 1204 1206 1208 1210 1212 1214

1200

**FIG. 12a**

| PLCP PREAMBLE | PLCP HEADER | MAC FRAME | BEAM INDICATOR | AP ADDRESS | STA ADDRESS | AGE LIMIT |
|---|---|---|---|---|---|---|

1202 1204 1214 1206 1208 1210 1212

1220

**FIG. 12b**

| PLCP PREAMBLE | PLCP HEADER | BEAM INDICATOR INFORMATION FLAG | BEAM INDICATOR | AP ADDRESS | STA ADDRESS | AGE LIMIT | MAC FRAME |
|---|---|---|---|---|---|---|---|

1302 1304 1306 1308 1310 1312 1314 1316

1300

**FIG. 13a**

| PLCP PREAMBLE | PLCP HEADER | MAC FRAME | BEAM INDICATOR INFORMATION FLAG | BEAM INDICATOR | AP ADDRESS | STA ADDRESS | AGE LIMIT |
|---|---|---|---|---|---|---|---|

1302 1304 1316 1306 1308 1310 1312 1314

1320

**FIG. 13b**

**FIG. 14**

1400

START

1402 — AP SELECTS BEAM FOR STA

1404 — AP SENDS BEAM INDICATOR INFORMATION TO STA

1406 — AGE LIMIT OF BEAM INDICATOR INFORMATION REACHED ?

YES → 1420 — STA SETS BEAM INDICATOR TO OMNI-DIRECTIONAL BEAM

1422 — STA SENDS PACKET ON OMNI-DIRECTIONAL BEAM

1424 — AP RECEIVES PACKET ON OMNI-DIRECTIONAL BEAM

NO

1408 — STA SETS BEAM INDICATOR TO SELECTED BEAM

1410 — STA SENDS PACKET ON SELECTED BEAM

1412 — AP BEGINS TO RECEIVE PACKET WITH BEAM INDICATOR ON OMNI-DIRECTIONAL BEAM

1414 — AP DECODES BEAM INDICATOR AND SWITCHES TO SELECTED BEAM TO RECEIVE REMAINDER OF PACKET

1416 — END

FIG. 15

EP 3 576 310 B1

1600

| ESS | IBSS | CF POLLABLE | CF POLL REQUEST | PRIVACY | RESERVED |
|---|---|---|---|---|---|
| 1602 | 1604 | 1606 | 1608 | 1610 | 1612 |

**FIG. 16**
**PRIOR ART**

1700

| CAPABILITY INFORMATION FIELD | LISTEN INTERVAL FIELD | SSID IE | SUPPORTED RATES IE | ANTENNA CAPABILITY IE | |
|---|---|---|---|---|---|
| 1702 | 1704 | 1706 | 1708 | 1710 | |

**FIG. 17**

1710

| ANTENNA TECHNOLOGY | NUMBER OF SUPPORTED BEAMS | SUPPORT OF TX ANTENNA INFO. AFTER PLCP HEADER | DIVERSITY TECHNIQUE | ANTENNA MEASUREMENT SIGNALING SUPPORT | MULTIPLE INPUT SUPPORT |
|---|---|---|---|---|---|
| 1802 | 1804 | 1806 | 1808 | 1810 | 1812 |

**FIG. 18**

**FIG. 19**

START

1902 — TRANSMITTING STA SENDS ANTENNA CAPABILITY INFORMATION

1900

1904 — RECEIVING STA RECEIVES ANTENNA CAPABILITY INFORMATION

1906 — DOES RECEIVING STA SUPPORT ANTENNA CAPABILITIES ?

1916 — RECEIVING STA NOTIFIES TRANSMITTING STA THAT IT DOES NOT HAVE THE REQUESTED ANTENNA CAPABILITIES

NO

YES

1908 — ADJUST SETTINGS AT RECEIVING STA TO HANDLE THE TRANSMITTING STA's ANTENNA CAPABILITIES

TRANSMITTING STA BEGINS TRANSMITTING WITHOUT ANTENNA CAPABILITIES

1918

1910 — SEND ACKNOWLEDGEMENT OF ANTENNA CAPABILITIES TO TRANSMITTING STA

1912 — TRANSMITTING STA BEGINS TRANSMITTING USING ANTENNA CAPABILITIES

1914 — END

25

2002 TRANSMITTING

RECEIVING 2004

STA

STA

2010

SEND ANTENNA CAPABILIITY INFORMATION

2012

SEND ANTENNA CAPABILIITY INFORMATION

2014

ANTENNA CAPABILIITY NEGOTIATION
OR EXCHANGE MEASUREMENTS

2016

DECIDE LOCALLY WHICH
ANTENNA FEATURES TO USE
BASED ON ANTENNA
CAPABILITIES SUPPORTED

2000

2018

DECIDE LOCALLY WHICH
ANTENNA FEATURES TO USE
BASED ON ANTENNA
CAPABILITIES SUPPORTED

**FIG. 20**

BEAM SWITCHING
DEVICE ⎯2118

2102

2110

2116 **FIG. 21**

2100

ANTENNA CAPABILITY
DETERMINING DEVICE

TRANSMITTER/
RECEIVER

2114

ANTENNA CAPABILITY
INFORMATION DEVICE

2112

2104

2124

2128

2122

2120

TRANSMITTER/
RECEIVER

ANTENNA CAPABILITY
DETERMINING DEVICE

STA SETTING
ADJUSTMENT
DEVICE

2126

ANTENNA CAPABILITY
INFORMATION DEVICE

## REFERENCES CITED IN THE DESCRIPTION

**Patent documents cited in the description**

- EP 1187506 A1

- US 2002193146 A1